# EUROPÄISCHE PATENTANMELDUNG

(11) **EP 3 499 688 A2**
(43) Veröffentlichungstag der Anmeldung: **19.06.2019**
(21) Anmeldenummer: 19154559.9
(22) Anmeldetag: 14.12.2012
(51) Int. Cl.: H02K 1/27

(54) **ROTORBLECHPAKET EINES ELEKTROMOTORS**

(30) Priorität: 23.12.2011 DE 102011122023
(62) Teilanmeldung aus: 12816239.3
(71) Anmelder: Brose Fahrzeugteile GmbH & Co. Kommanditgesellschaft, Würzburg, 97076 Würzburg (DE)
(72) Erfinder: BERKOUK, Maurad, 29217 Le Conquet (FR); CORDRIE, Sylvain, 97230 Estenfeld (DE)
(74) Vertreter: FDST Patentanwälte

(57) **Zusammenfassung**

Die Erfindung betrifft ein Rotorblechpaket (1) für einen Elektromotor, mit einer Mehrzahl von axial zusammengesetzten mehrteiligen und einteiligen Blechen (2 bis 4) mit kreissektorartigen Blechabschnitten (2a, 3a, 3c, 4a, 4c), zwischen denen radiale und umfangsseitig offene Ausnehmungen (9) zur Aufnahme jeweils eines Magneten (10) gebildet sind, wobei die kreissektorartigen Blechabschnitte (3a, 3c) der einteiligen und/oder mehrteiligen Bleche (2 bis 4) kreisradiusseitig mindestens eine Klinkung (12) aufweisen, und wobei eine vorgebbare Anzahl der kreissektorartigen Blechabschnitte (3a, 3c) der mehrteiligen Bleche (3, 4) kreisradiusseitig mindestens eine azimutale Lasche (11) aufweist, die im Zuge des Einsetzens des entsprechenden Magneten (10) in die jeweilige Ausnehmungen (9) axial biegbar ist und in eine Klinkung (12) eines Blechabschnitts (3a, 3c) eines axial beabstandeten Blechs (3) in Folge der axialen Biegung eingreift.

## Beschreibung

Die Erfindung betrifft ein Rotorblechpaket für einen Elektromotor, mit einer Mehrzahl von axial zusammengesetzten mehrteiligen und/oder einteiligen Blechen mit kreissektorartigen Blechabschnitten, zwischen denen radiale und umfangsseitig offene Ausnehmungen zur Aufnahme jeweils eines Magneten gebildet sind.

Elektromotoren mit derartigen Blechpaketen sind als Kleinmotoren häufig im Kraftfahrzeugbereich und dort insbesondere als Lenkungsmotoren oder in Verstellantrieben eingesetzt. Während bei einem Elektromotor als so genannter Außenläufermotor der Rotor den feststehenden Stator konzentrisch umgibt, ist bei einem Innenläufermotor der Stator unter Bildung eines Luftspaltes koaxial zum rotierenden Läufer (Rotor) angeordnet.

Bei einem permanent erregten bürstenlosen Gleichstrommotor trägt der Rotor eine Anzahl von Dauer- oder Permanentmagneten, während der Stator eine beispielsweise dreiphasig verschaltete Spulenwicklung umfasst, die über pulsseitenmodulierte Ströme angesteuert wird. Ist dabei der Rotor mit den Magneten versehen, so können diese durch Klemmung und/oder Verklebung am Blechpaket des Rotors gehalten sein. Das Blechpaket besteht aus einer Vielzahl von stanzpaketierten Einzelblechen (Blechlaminate).

Aus der EP 1 223 658 A1 und aus der DE 10 2007 024 406 A1 ist es bekannt, ein Rotorblechpaket aus ein- und mehrstückigen oder -teiligen Blechen mit kreissektorartigen Blechabschnitten zusammenzusetzen. Hierzu weist ein erster einstückiger (einteiliger) Blechtyp innen- und/oder außenumfangsseitig stegartige Verbindungsbereiche zwischen den Blechabschnitten auf. Ein zweiter mehrstückiger (mehrteiliger) Blechtyp besteht praktisch aus den einzelnen, untereinander nicht verbunden Blechabschnitten. Die Verbindung der axial gestapelten Bleche untereinander erfolgt nach Art einer Stanzpaketierung mittels in die Blechabschnitte eingestanzten, ineinandergreifende (sickenartige) Ausnehmungen und Vorsprünge. Zwischen den Blechabschnitten sind radiale, umfangsseitig offene Ausnehmungen gebildet, die im paketierten Blechstapel axial fluchten und Aufnahmetaschen für Permanentmagnete bilden.

Aus der DE 103 57 502 A1 ist ein Rotor bekannt, der sich in axialer Richtung aus einem Blechpaket aus identisch geformten Einzelblechen zusammensetzt, wobei in Aufnahmetaschen des Rotors eingesetzte Magnete mittels an den Schmalseiten der Aufnahmetaschen vorgesehenen Nasen gehalten sind.

Bei dem aus der DE 10 2007 029 719 A1 bekannten Blechpaket tragen Taschenöffnungen von Einzelblechen entweder an beiden Schmalseiten oder an nur einer, jedoch stets an der gleichen Schmalseite eine Klemmlasche.

Aus der US 5,581,140 ist ebenfalls ein aus Einzelblechen gestapelter Rotor mit Aufnahmetaschen für Magnete bekannt. An den Längsseiten der Aufnahmetaschen sind Klemmlaschen zur Klemmfixierung der Magnete vorgesehen, wobei die Klemmlaschen nicht in jeder Blechlage, sondern lediglich in jeder dritten oder vierten Blechlage vorgesehen sind.

Der Erfindung liegt die Aufgabe zugrunde, ein Rotorblechpaket der eingangs genannten Art zu verbessern. Insbesondere soll in einfacher Weise eine zuverlässige Halterung der Bleche untereinander sowie insbesondere der Magnete innerhalb des Blechpakets ermöglicht werden.

Diese Aufgabe wird erfindungsgemäß gelöst durch die Merkmale des Anspruchs 1. Vorteilhafte Ausgestaltungen und Weiterbildungen sind Gegenstand der Unteransprüche.

Hierzu ist das erfindungsgemäße Rotorblechpaket für einen Elektromotor aus einer Mehrzahl von Blechen mit radialen Ausnehmungen zur Bildung von Aufnahmetaschen für jeweils ein Magnet (Permanentmagnet) zusammengesetzt, d. h. axial übereinander angeordnet (gestapelt). Dabei sind eine vorgebbare erste Anzahl von einstückigen, d. h. einteiligen Blechen und eine vorgebbare zweite Anzahl von mehrstückigen bzw. mehrteiligen Blechen, jeweils mit kreissektorartigen Blechabschnitten vorgesehen. Jeder dieser Blechabschnitte nimmt einen Kreissektor (Kreisausschnitt) und damit eine Teilfläche der Kreisfläche des jeweiligen Bleches ein, wobei jeder Blechabschnitt von einem Kreisbogen und zwei Kreisradien begrenzt ist, die ihrerseits eine der Magnetausnehmungen radial begrenzen.

Die einteiligen Bleche weisen innenumfangsseitig vorzugsweise einen Blechabschnitt mit zentraler Materialausnehmung zur Wellendurchführung auf. An diesen kreisringförmigen Blechabschnitt sind die kreissektorartigen Blechabschnitte der einteiligen Bleche über Blechstege speichenartig angeformt. Auch die mehrteiligen Bleche weisen vorzugsweise innenumfangsseitig einen mit einer zentralen Materialausnehmung zur Wellendurchführung versehenen Blechabschnitt auf, an den zumindest einige der kreissektorartigen Blechabschnitte, vorzugsweise in Blechumfangsrichtung jeder zweite Blechabschnitt, über Blechstege angeformt sind.

Die kreissektorartigen Blechabschnitte aller Bleche sind hinsichtlich deren Sektorengröße praktisch gleich, so dass die zwischen deren Kreisradien verbleibenden Ausnehmungen im gestapelten Blechpaket axial fluchten und radiale Aufnahmetaschen für die Permanentmagnete bilden. Eine vorgebbare Anzahl der Blechabschnitte, vorzugsweise lediglich der mehrteiligen Bleche, weist kreisradiusseitig d. h. entlang der Kreisradien der jeweiligen Blechabschnitte mindestens eine, vorzugsweise zwei axial biegbare Laschen auf. Die jeweilige Lasche ragt in die von diesem Kreisradius bzw. dieser Blechabschnittskante begrenzte Magnetausnehmung hinein.

Jede der axial biegbaren Laschen (Fügelasche) jedes entsprechenden kreissegmentartigen Blechabschnitts des jeweiligen Bleches ist zweckmäßigerweise gebildet durch zwei in die Blechabschnittskante - also kreisradiusseitig - eingebrachte Klinkungen, welche die jeweilige Lasche beidseitig flankieren. Die jeweilige Lasche verläuft azimutal, d. h. in Blechumfangsrichtung und überragt die jeweilige kreisradiusseitige Blechabschnittskante des entsprechenden Blechabschnitts. Die Laschen bzw. Fügelaschen sind somit im Zuge des Stanzprozesses in einfacher Art und Weise herstellbar und in den entsprechenden kreissegmentartigen Blechabschnitt einbringbar.

In vorteilhafter Ausgestaltung sind nur einige der kreissektorartigen Blechabschnitte mit derartigen Laschen versehen. Vorzugsweise mindestens zwei Blechabschnitte, die nachfolgend als Blechabschnittspaar bezeichnet werden, weisen an einem der beiden Kreisradien bzw. Blechabschnittskanten jeweils eine Lasche auf. Besonders bevorzugt sind ein- oder zweimal zwei direkt benachbarte Blechabschnittspaare vorgesehen, von denen ein Blechabschnitt beiden Blechabschnittspaaren zugeordnet ist und beidseitig an dessen Kreisradien bzw. Blechabschnittskanten jeweils eine Lasche aufweist. Diese beiden Laschen sind an radial versetzten Positionen entlang des jeweiligen Kreisradius angeordnet. Die beiden zu diesem mittleren, zwei Laschen aufweisenden Blechabschnitt benachbarten Blechabschnitte weisen am dem mittleren Blechabschnitt zugewandten Kreisradius jeweils nur eine einzelne Lasche auf, die der gegenüberliegenden Lasche des mittleren Blechabschnitts tangential bzw. azimutal direkt gegenüberliegend vorgesehen ist.

Zweckmäßigerweise weist jeder kreissektorartige Blechabschnitt des jeweiligen einstückigen Bleches mindestens eine Klinkung (Fügeklinkung) und vorzugsweise an jedem Kreisradius jeweils mindestens eine Klinkung bzw. Fügeklinkung auf. Besonders bevorzugt weisen diejenigen kreissektorartigen Blechabschnitte des jeweiligen Blechs an jedem Kreisradius zwei Klinkungen auf, die den Klinkungen eines benachbarten Blechabschnitts azimutal bzw. tangential direkt gegenüber liegen. Die Laschen und Klinkungen aller kreissektorartigen Blechabschnitte jedes Blechtyps (ein- oder mehrteilig) befinden sich stets in ein und demselben Raster, so dass innerhalb des Rotorblechpaketes Laschen und Klinkungen stets axial übereinander angeordnet sind und somit axial fluchten.

Dadurch ist erreicht, dass eine im Zuge des Einsetzens eines Magnets in die entsprechende, durch die Ausnehmungen der Einzelbleche gebildete Aufnahmetasche des Rotorblechpaketes axial gebogene Lasche stets in eine oder mehrere axial darunter liegende Klinkungen eingreift, in diese also ausweichen kann. Die Laschen dringen hierbei zumindest teilweise in die darunter befindlichen Klinkungen ein, was einen besonders vorteilhaften Zusammenhalt der betroffenen Bleche und einzelnen Blechabschnitte im Rotorblechpaket (Blechstapel) bewirkt. Die Laschen und Klinkungen übernehmen somit eine Mehrfachfunktion, nämlich einerseits ein Klemmfixierung der Magnete in den Aufnahmetaschen und andererseits den Zusammenhalt der betroffenen Bleche bzw. Blechabschnitte. Eine weitere Funktion der Laschen und Klinkungen ist die Zentrierung der Bleche oder Blechabschnitte innerhalb des Blechpaketes oder Teilblechstapels.

Eine besonders zweckmäßige Ausgestaltung sieht insbesondere in diesem Zusammenhang vor, die oder jede Klinkung trapezförmig auszugestalten. Diese Ausgestaltung der Form der Klinkungen ist derart, dass insbesondere zumindest die jeweilige Lasche im Zuge deren axialer Biegung verformt wird. Vorzugsweise verformen sich die Lasche und die jeweilige Klinkung gegenseitig (wechselseitig) mechanisch. Diese Maßnahme erhöht den Effekt des Blechzusammenhaltes bzw. der Blech- oder Blechabschnittszentrierung.

Werden im Zuge des Stapelns die Bleche von Blechlage zu Blechlage um einen Kreissegmentwinkel gegeneinander versetzt oder verdreht, so fluchten bei allen aufeinanderliegenden Blechabschnitten stets Laschen mit korrespondierenden Klinkungen, in welche die Laschen axial eingebogen werden können. Auf diese Art werden alle beispielsweise in einem entsprechenden Blechteilstapel enthaltenen Bleche miteinander gefügt sowie aneinander verdrehsicher gehalten, zentriert und gegen ein radiales Verschieben gegeneinander gesichert. Aufgrund der Ausbildung der kreissektorartigen Blechabschnitte mit Laschen und/oder Klinkungen können einteilige und mehrteilige Bleche in axial unterschiedlichen Abfolgen gestapelt sein sowie in Gruppen oder Teilpaketen verschiedener Kombinationen von ein- und mehrteiligen Blechen miteinander gefügt werden.

In dem auf diese Art und Weise gebildeten Blechpaket fluchten die Ausnehmungen zwischen den kreissektorartigen Blechabschnitten der Bleche miteinander und bilden die sich in Axialrichtung erstreckenden Aufnahmetaschen für die Permanentmagnete. Deren Halterung innerhalb dieser Aufnahmetaschen erfolgt durch Klemmfixierung mittels der Laschen. Dabei sind aufgrund gezielt in Paketumfangsrichtung gedrehter Blechanordnung alle Aufnahmetaschen mit einer Anzahl von Laschen versehen. Zusätzlich sind vorzugsweise an zumindest einigen der innerhalb des Blechpakets gestapelten Bleche, insbesondere an den mehrteiligen Blech, weitere Laschen (Klemmlaschen) vorgesehen, die an den kreisförmigen Blechringabschnitt, d. h. den kreisringförmigen Blechabschnitt mit zentraler Materialaussparung zur Wellendurchführung des jeweiligen Bleches angeformt sind und radial in die entsprechende Ausnehmung dieses Bleches hineinragen. Geeigneterweise weist jedes dieser Bleche lediglich zwei derartige Klemmlaschen auf, die einander diametral gegenüberliegend angeordnet sind.

Wenn die Bleche gegeneinander versetzt bzw. um die zentrale Blechachse verdreht gestapelt werden, entspricht der Kreissektorwinkel oder der Dreh- bzw. Versatzwinkel demjenigen Bruchteil von 360°, den die von einem kreissektorartigen Blechabschnitt und einer Ausnehmung gebildete Teilfläche beansprucht. Bei einer Blechanordnung mit beispielsweise zehn kreissektorartigen Blechabschnitten - und somit bei einem Rotorblechpaket zur Aufnahme von zehn Magneten - beträgt der Kreissektorwinkel 36°. Unter Zugrundelegung einer solchen Teilung können bei der Bildung eines Blech- oder Teilblechpakets mehrere Bleche gegeneinander um einen Kreissektorwinkel von 36° versetzt gestapelt und mittels der Laschen und Klinkungen miteinander gefügt werden. Dabei sind alle beteiligten und jeweils übereinander angeordneten kreissektorartigen Blechabschnitte mit einer minimalen, jedoch ausreichenden Anzahl von Laschen zuverlässig aneinander gehalten. Infolge der gezielten Positionierung der Laschen und Klinkungen ist hierbei eine Kollision der Laschen vermieden.

Nachfolgend werden Ausführungsbeispiele der Erfindung anhand einer Zeichnung erläutert. Darin zeigen:
- Fig. 1: in Draufsicht eine Hälfte eines mehrteiligen Blechs mit kreissektorartigen Blechabschnitten sowie Laschen (Fügelaschen) und Klinkungen (Fügeklinkungen),
- Fig. 2: in einer Darstellung gemäß Fig. 1 ein mehrteiliges Blech aus einer entsprechenden Anzahl kreissektorartiger Blechabschnitte mit Klinkungen (Fügeklinkungen),
- Fig. 3: in einer Darstellung gemäß Fig. 1 ein einteiliges Blech aus einer entsprechenden Anzahl kreissektorartiger Blechabschnitte mit Klinkungen (Fügeklinkungen),
- Fig. 4: in Draufsicht ein einteiliges Blech aus kreissektorartigen Blechabschnitten mit Laschen (Fügelaschen) und Klinkungen (Fügeklinkungen),
- Fig. 5: in Draufsicht ein mehrteiliges Blech aus einer entsprechenden Anzahl kreissektorartigen Blechabschnitten mit Klinkungen (Fügeklinkungen),
- Fig. 6: schematisch ein Fügeverbindung zwischen sich verformender Lasche und Klinkung unter Einwirkung eines Permanentmagneten,
- Fig. 7: perspektivisch ein Rotorblechpaket aus Teilblechpaketen, und
- Fig. 8: das Rotorblechpaket ausschnittsweise in größerem Maßstab.

Einander entsprechende Teile sind in allen Figuren mit den gleichen Bezugszeichen versehen.

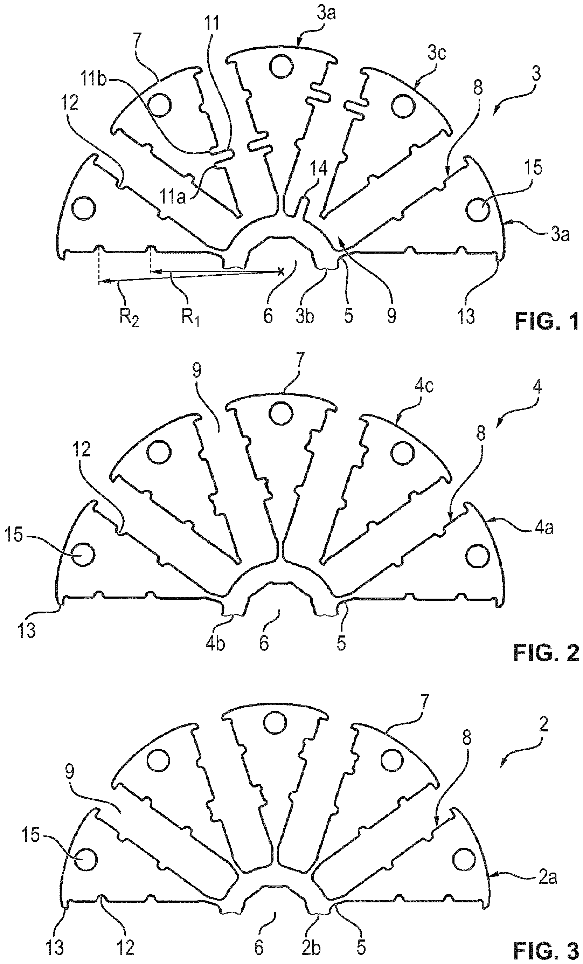

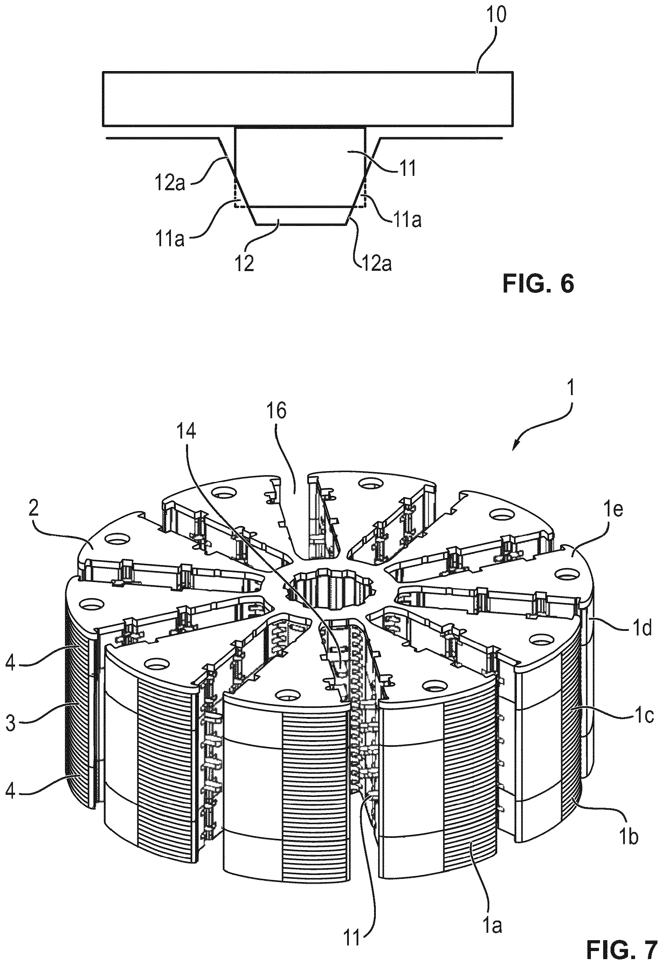

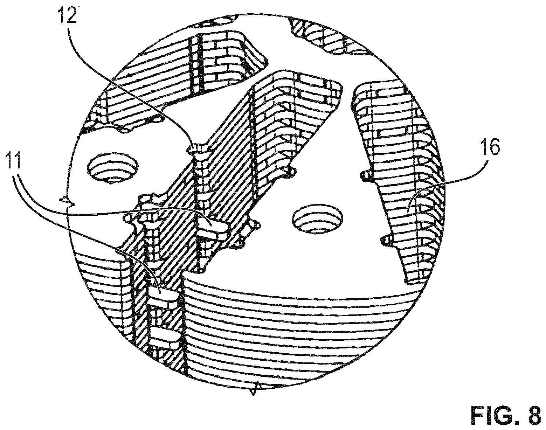

Die Fig. 7 und 8 (ausschnittsweise) zeigen ein Rotorblechpaket 1 mit einteiligen Blechen 2 gemäß Fig. 3 sowie mit mehrteiligen Blechen 3, 4 gemäß den Fig. 1 bzw. 2. Die ein- und mehrteiligen Bleche 2 bzw. 3 und 4 sind in unterschiedlichen Abfolgen und dabei gemäß Fig. 7 von unten nach oben in Teilpaketen oder Teilblechstapeln 1a bis 1e mit einem Teilpaket 1a aus beispielsweise drei einteiligen Blechen 2 gemäß Fig. 3 und einem Teilblechpaket 1b aus mehreren mehrteiligen Blechen 4 gemäß Fig. 2 sowie einem Teilpaket 1c aus mehreren mehrteiligen Blechen 3 gemäß Fig. 1 und einem Teilpakete 1d aus wiederum mehreren mehrteiligen Blechen 4 gemäß Fig. 2 sowie einem Teilpaket 1e mit beispielsweise nur einem einteiligen Blech (Abschlussblech) 2 gemäß Fig. 3 gestapelt.

Die Teilpakete 1b und 1d sind beispielsweise aus sechs bis neun bzw. aus acht mehrteiligen Blechen 4 gemäß Fig. 2 gebildet, während das mittlere Teilpaket 1c beispielsweise aus zwanzig mehrteiligen Blechen 3 gemäß Fig. 1 zusammengesetzt ist. Das Rotorblechpaket 1 ist in nicht näher dargestellter Art und Weise Bestandteil eines Rotors eines Elektromotors, insbesondere eines Antriebs oder Verstellantriebs eines Kraftfahrzeugs.

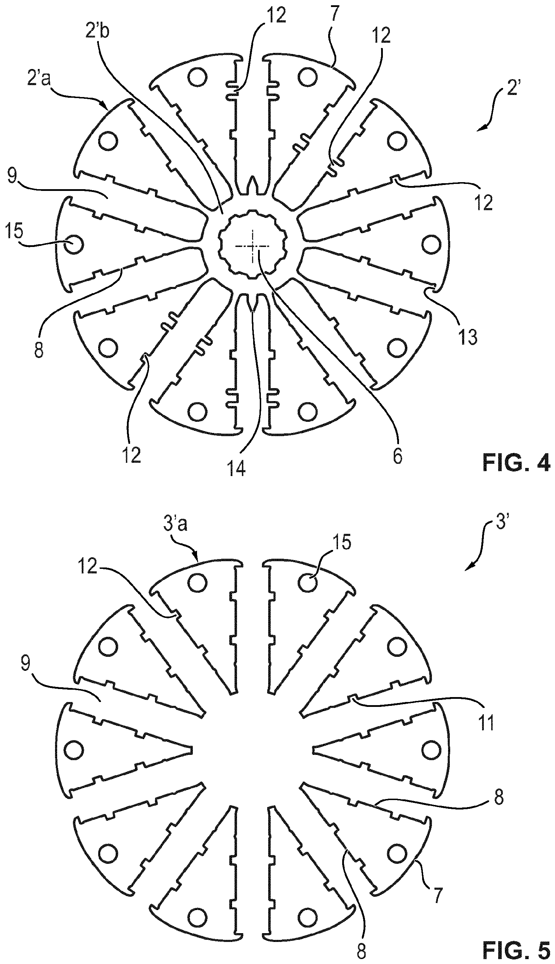

Die Fig. 4 und 5 zeigen alternative Ausführungen eines einteiligen und eines mehrteiligen Blechs 2' bzw. 4'.

Das in Fig. 1 gezeigte mehrteilige Blech 3 weist eine Anzahl von kreissektorartigen Blechabschnitten 3a auf, von denen - in Blechumfangsrichtung gesehen -jeder zweite Blechabschnitt 3a über einen Blechsteg 5 an einen zentralen, kreisringförmigen Blechabschnitt 3b mit einer Materialaussparung 6 zur Wellendurchführung des Rotors des Elektromotors angeformt ist. Die verbleibenden Blechabschnitte 3c sind nicht mit dem zentralen Blechabschnitt 3b verbunden. Jeder kreissektorartige Blechabschnitt 3a, 3c bildet eine von einem Kreisbogen 7 und zwei Kreisradien 8 begrenzte Teilfläche der von dem Blech 3 eingenommenen Kreisfläche. Die nachfolgend auch als Blechabschnittskanten bezeichneten Kreisradien 8 begrenzen jeweils eine radiale Ausnehmung 9 für im Rotorblechpaket 1 radial angeordnete Permanentmagnete (Radialmagnete), von denen in Fig. 6 ein Magnet 10 dargestellt ist.

Einige der kreissektorartigen Blechabschnitte 3a, 3c weisen entlang deren Blechabschnittskanten 8 azimutale oder tangentiale Laschen (Fügelaschen) 11 auf, während alle Blechabschnitte 3a, 3c im Bereich deren Blechabschnittskanten 8 mit Klinkungen (Fügeklinkungen) 12 versehen sind. Die Laschen 11 und Klinkungen 12 sind in einem bestimmten radialen Raster vorgesehen, welches demjenigen Klinkungsraster der in den Figuren 2 bis 5 gezeigten Bleche 2 bis 4' entspricht. Im Bereich des Kreisbogens 7 des jeweiligen Blechabschnitts 3a, 3c sind an diesen azimutal bzw. tangential orientierte Haken (Tangentialhaken) 13 angeformt bzw. vorgesehen, die ein radiales Ausgleiten der Magnete 10 aus den Ausnehmungen 9 verhindern.

Erkennbar weisen nur einige der sektorartigen Blechabschnitte 3a derartige Laschen 11 auf. Lediglich zwei Gruppen mit jeweils drei direkt benachbarten Blechabschnitten 3a, 3c und somit insgesamt sechs Blechabschnitte 3a, 3c in vier Blechabschnittspaaren weisen jeweils eine Lasche 11 oder zwei Laschen 12 auf.

In Fig. 1 ist nur eine solche Gruppe mit drei direkt benachbarten und Laschen 11 aufweisenden Blechabschnitten 3a, 3c dargestellt, während die zweite Gruppe der nicht dargestellten zweiten Hälfte des Bleches 3 zugeordnet ist. Die mit zwei Laschen 11 versehenen Blechabschnitte 3a weisen an beiden Kreisradien 8 jeweils eine Lasche 11 auf, die zueinander radial versetzt sind. An dieser radialen Position befinden sich wiederum diametral gegenüberliegend die Laschen 11 der benachbarten Blechabschnitte 3c.

Die mit Laschen 11 ausgeführten Blechabschnitte 3a, 3c weisen an den radial exponierten Stellen bzw. Positionen ebenfalls Klinkungen 12 auf. Die übrigen Blechabschnitte 3a sind laschenfrei und weisen an jeweils beiden Kreisradien 8 jeweils zwei Klinkungen 12 an radial versetzten Positionen im gleichen Klinkungs- und Laschenraster auf. Dabei sind alle Klinkungen 12 und Laschen 11 derart radial positioniert, dass sich im Bereich einer jeden Ausnehmung 9 stets Laschen 11 und/oder Klinkungen 12 diametral gegenüberliegen. Mit anderen Worten befinden sich Laschen 11 bzw. Klinkungen 12 aller Blechabschnitte 3a, 3c auf einem Umfangskreis mit einem ersten Radius (erste Radial- oder Rasterposition) R₁ oder einem zweiten Radius (zweite Radial- bzw. Rasterposition) R₂.

Das mehrteilige Blech 3 gemäß Fig. 1 weist zudem mindestens eine, vorzugsweise zwei um180° versetzt positionierte radiale Klemmlasche 14 auf, die an den zentralen Blechabschnitt 3b angeformt sind und in die entsprechende Ausnehmung 9 hineinragen. Auch kann das einstückige Blech 2' gemäß Fig. 4 zwei derartige Klemmlaschen 14' an diametral gegenüberliegenden Positionen aufweisen.

In die sektorartigen Blechabschnitte 3a sind kreisrunde Materialausnehmungen 15 eingebracht. Diese dienen zur Reduzierung der Querinduktivität und insbesondere als Montagehilfe bzw. zur Fixierung der Bleche 2 bis 4' im Blechstapel 1, beispielsweise mittels Schraubbolzen oder dergleichen.

Jede der Laschen 11 ist durch jeweils ein Klinkungspaar 11a, 11b beidseitig der jeweiligen Lasche 11 im Bereich der Blechabschnittskante 8 gebildet. Die Laschen 11 sind somit im Bereich der Blechabschnittskanten 8 durch die azimutalen bzw. tangentialen Klinkungen 11a, 11b aus dem jeweiligen Blechabschnitt 3a, 3c ausgestanzt und erstrecken sich über den Kreisradius 8 hinaus in die jeweilige Ausnehmung 9 hinein.

Das in Fig. 2 dargestellte mehrteilige Blech 4 weist ebenfalls kreissektorartige Blechabschnitte 4a, die über Blechstege 5 an den zentralen, ringförmigen Blechabschnitt 4b angeformt sind, sowie kreissektorartige Blechabschnitte 4c auf, die nicht an den zentralen Blechabschnitt 4b angeformt sind. Die kreissektorartigen Blechabschnitte 4a, 4c weisen lediglich Klinkungen 12 auf. Diese befinden sich an den radialen Positionen R₁ und R₂ gemäß dem Raster des Blechs 3 in Fig. 1.

Bei dem in Fig. 3 dargestellten einteiligen Blech 2 sind alle kreissektorartigen Blechabschnitte 2a über Blechstege 5 an den zentralen Blechabschnitt 2b angeformt. Auch bei diesem Blechtyp weisen alle kreissektorartigen Blechabschnitte 2a lediglich Klinkungen 12 auf, die wiederum im gleichen Raster mit den Positionen R₁ und R₂ vorgesehen sind.

Jeder der kreissektorartigen Blechabschnitte der Bleche 2 bis 4 nimmt eine von dem Kreisbogen 7 und den beiden Kreisradien bzw. Blechabschnittskanten 8 begrenzte Teilfläche ein, die gleich der Teilfläche eines kreissektorartigen Blechabschnitts der anderen Bleche 2 bis 4' ist. Da die Blechabschnitte der Bleche 2 bis 4 untereinander gleich sind, fluchten die Kreisradien 7 und Kreisbögen 8 aller Blechabschnitte in gestapeltem Zustand der Bleche 2 bis 4 miteinander. Die dann ebenfalls miteinander fluchtenden Ausnehmungen 9 aller Bleche 2 bis 4 bilden sich in Axialrichtung entlang der Blechpaketmittelachse (Mittellängsachse) erstreckende Aufnahmetaschen 16 (Fig. 7) für die innerhalb des Rotorblechpaketes 1 radial, d. h. sternförmig angeordneten Magnete 10.

Innerhalb des Rotorblechpaketes oder -teilpaketes 1 sind zumindest die mit Laschen 11 versehenen Bleche 3 um einen Kreissektorwinkel α gegeneinander versetzt oder verdreht gestapelt. Der Kreissektorwinkel α beträgt 360° geteilt durch die Anzahl a der Blechabschnitte 3a, 3c (α = 360°/a). Bei gemäß dem Ausführungsbeispiel insgesamt zehn Blechabschnitten 3a, 3c (a = 10) beträgt der Kreissektorwinkel α = 36°.

Werden fünf derartige Bleche 3 um jeweils diesen Kreissektorwinkel α in der gleichen Drehrichtung gegeneinander versetzt, so befinden sich einerseits in jeder Aufnahmetasche 16 in Axialrichtung mehrere Laschen 11, die in korrespondierende Klinkungen 12 eingreifen können. Andererseits befindet sich in jeder Aufnahmetasche 16 mindestens eine radiale Klemmlasche 14, jedoch in axial unterschiedlicher Position bzw. Ebene, wie aus den Fig. 7 und 8 hervorgeht.

Beim Einstecken der Permanentmagnete 10 in die jeweilige Aufnahmetasche 14 weicht die entsprechende Klemmlasche 11 axial aus und klemmt bzw. drückt den jeweiligen Magneten gegen die hinterschnittenen Haken 13 im Bereich der Kreisradien 7. Ebenso werden die Laschen 11 im Zuge des Einsetzens der Magnete 10 axial abgebogen und greifen oder dringen in die axial benachbarten, d. h. die im Blechpaket 1 oder Teilstapel darunter befindlichen Klinkungen 12 ein. Hierdurch werden einerseits die Magnete 10 klemmfixiert sowie andererseits die Bleche 3 zumindest des Teilblechpakets 1c zentriert und miteinander gefügt.

Fig. 6 zeigt eine bevorzugte Ausführungsform der oder jeder Klinkung 12. Deren Abmessungen sind derart gewählt, dass die entsprechende Lasche 11 mit Übermaß in diese Klinkung 12 eingreift. Bevorzugt ist die Klinkung 12 trapezförmig ausgebildet, so dass die Lasche 11 zumindest mit deren freiendseitigen Eckbereichen 11a die schrägen Seitenflanken 12a der Klinkung 12 überragen. Im Zuge des Umbiegens und Eingreifens der Lasche 11 in die Klinkung 12 wird zumindest die Lasche 11 verformt. Vorzugsweise wird jedoch eine gegenseitige Verformung von Lasche 11 und Klinkung 12 erreicht. Dies führt zu einer besonders zuverlässigen Fügeverbindung zwischen den betroffenen, axial benachbarten Blechen 3 bzw. Blechabschnitten 3a, 3c.

Die Erfindung ist nicht auf das vorstehend beschriebene Ausführungsbeispiel beschränkt. Vielmehr können auch anderen Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 1: Rotorblechpaket
- 1a-e: Teilpaket/-blechstapel
- 2: einteiliges Blech
- 2a: kreissektorartiger Blechabschnitt
- 2b: kreisringförmiger Blechabschnitt
- 3: mehrteiliges Blech
- 3a: kreissektorartiger Blechabschnitt
- 3b: ringförmiger Blechabschnitt
- 3c: kreissektorartiger Blechabschnitt
- 4: mehrteiliges Blech
- 4a: kreissektorartiger Blechabschnitt
- 4b: ringförmiger Blechabschnitt
- 4c: kreissektorartiger Blechabschnitt
- 5: Blechsteg
- 6: Materialaussparung
- 7: Kreisbogen
- 8: Kreisradius/Blechabschnittskante
- 9: Ausnehmung
- 10: Magnet
- 11: Füge-/Lasche
- 11a,b: Klinkungspaar
- 12: Füge-/Klinkung
- 13: Tangential-/Haken
- 14: Klemmlasche
- 15: Materialausnehmung
- 16: Aufnahmetasche

- R_{1,2}: Radialposition
- α: Kreissektorwinkel

## Patentansprüche

1. Rotorblechpaket (1) für einen Elektromotor, mit einer Mehrzahl von axial zusammengesetzten mehrteiligen und einteiligen Blechen (2 bis 4) mit kreissektorartigen Blechabschnitten (2a, 3a, 3c, 4a, 4c), zwischen denen radiale und umfangsseitig offene Ausnehmungen (9) zur Aufnahme jeweils eines Magneten (10) gebildet sind,
**dadurch gekennzeichnet,**
- **dass** die kreissektorartigen Blechabschnitte (3a, 3c) der einteiligen und/- oder mehrteiligen Bleche (2 bis 4) kreisradiusseitig mindestens eine Klinkung (12) aufweisen, und
- **dass** eine vorgebbare Anzahl der kreissektorartigen Blechabschnitte (3a, 3c) der mehrteiligen Bleche (3, 4) kreisradiusseitig mindestens eine azimutale Lasche (11) aufweist, die im Zuge des Einsetzens des entsprechenden Magneten (10) in die jeweilige Ausnehmungen (9) axial biegbar ist und in eine Klinkung (12) eines Blechabschnitts (3a, 3c) eines axial beabstandeten Blechs (3) in Folge der axialen Biegung eingreift.

2. Rotorblechpaket (1) nach Anspruch 1,
**dadurch gekennzeichnet,**
**dass** die axial biegbare Lasche (11) jedes kreissektorartigen Blechabschnitts (3a, 3c) durch zwei in diesen kreisradiusseitig und beidseitig der Lasche (11) eingebrachte Klinkungen (11a, 11b) gebildet ist.

3. Rotorblechpaket (1) nach Anspruch 1 oder 2,
**dadurch gekennzeichnet,**
**dass** die einteiligen Bleche (2) einen eine Materialaussparung (6) zur Wellendurchführung bildenden zentralen Blechabschnitt (2b) aufweisen, an den die kreissektorartigen Blechabschnitte (2a) über Blechstege (5) angeformt sind.

4. Rotorblechpaket (1) nach einem der Ansprüche 1 bis 3,
**dadurch gekennzeichnet,**
**dass** die mehrteiligen Bleche (3, 4) einen eine Materialaussparung (6) zur Wellendurchführung bildenden zentralen Blechabschnitt (3b, 4b) aufweisen, an welchen mindestens ein, vorzugsweise jeder zweite, kreissektorartige Blechabschnitt (3a, 4a) über einen Blechsteg (5) angeformt ist.

5. Rotorblechpaket (1) nach einem der Ansprüche 1 bis 4,
**dadurch gekennzeichnet,**
**dass** eine vorgebbare Anzahl der Bleche (2 bis 4), insbesondere der mehrteiligen Bleche (3), an deren zentralen Blechabschnitt (3b) mindestens eine radiale Klemmlasche (14), vorzugsweise genau zwei einander diametral gegenüber angeordnete radiale Klemmlaschen (14), zur Klemmfixierung der Magnete (10), aufweist.

6. Rotorblechpaket (1) nach einem der Ansprüche 1 bis 5,
**dadurch gekennzeichnet,**
**dass** die Bleche (2 bis 4), insbesondere die mit Laschen (11) versehenen Bleche (3), um mindestens einen Kreissektorwinkel (α) gegeneinander verdreht gestapelt sind.

7. Rotorblechpaket (1) nach einem der Ansprüche 1 bis 6,
**gekennzeichnet durch**
eine Anzahl von Blechen (3) mit entlang der Kreisradien (8) deren kreissektorartige Blechabschnitte (3a, 3c) mindestens einer Lasche (11) und mindestens einer Klinkung (12) derart, dass in Folge von um mindestens einen Kreissektorwinkel (α) gegeneinander versetzt gestapelten Blechen (3) innerhalb von durch deren miteinander fluchtenden Ausnehmungen (9) gebildeten Aufnahmetaschen (16) für die Magnete (10) alternierend kreissektorartige Blechabschnitte (3a, 3c) mit und ohne Laschen (11) axial übereinander angeordnet sind.

8. Rotorblechpaket (1) nach Anspruch 7,
**dadurch gekennzeichnet,**
**dass** jeder Aufnahmetasche (16) zwei einander gegenüberliegend angeordnete Laschen (11) zugeordnet sind.

9. Rotorblechpaket (1) nach einem der Ansprüche 1 bis 8, wobei die Bleche (2 bis 4) in mindestens drei Teilblechpaketen (1a bis 1e) gestapelt sind.

10. Rotorblechpaket (1) nach Anspruch 9,
**dadurch gekennzeichnet,**
- **dass** ein erstes und ein drittes Teilblechpaket (1b, 1d) lediglich aus mehrteiligen Blechen (4) ohne Laschen zusammengesetzt sind, und
- ein axial zwischen dem ersten und dritten Teilblechpaket (1b bzw. 1d) vorgesehenes zweites Teilblechpaket (1c) aus mehrteiligen Blechen (3) mit Laschen (11) zusammengesetzt ist.

11. Rotorblechpaket (1) nach Anspruch 9 oder 10,
**gekennzeichnet durch**
mindestens ein stirnseitig, vorzugsweise beidseitig, der Teilblechpakete (1b, 1c, 1d) vorgesehenes einteiliges Blech (2), insbesondere ohne Laschen.
